# EUROPEAN PATENT SPECIFICATION

(11) **EP 3 322 571 B1**
(45) Date of publication and mention of the grant of the patent: **18.03.2020**
(21) Application number: 16739161.4
(22) Date of filing: 15.07.2016
(51) Int. Cl.: B29C 65/06, B29C 65/78, B23K 20/12

(54) **VIBRATION WELDING SYSTEM, VIBRATION WELDING METHOD AND METHOD OF UPGRADING**
VIBRATIONSSCHWEISSSYSTEM, VIBRATIONSSCHWEISSVERFAHREN UND VERFAHREN ZUR AUFRÜSTUNG
SYSTÈME DE SOUDAGE PAR FRICTION VIBRATOIRE, PROCÉDÉ DE SOUDAGE PAR FRICTION VIBRATOIRE ET PROCÉDÉ DE VALORISATION

(30) Priority: 15.07.2015 US 201514800097
(43) Date of publication of application: 23.05.2018
(73) Proprietor: Telsonic Holding AG, 9552 Bronschhofen (CH)
(72) Inventor: BACHER, Jochen, Waterford, Michigan 48329 (US)
(74) Representative: Hepp Wenger Ryffel AG
(86) International application number: PCT/EP2016/066955
(87) International publication number: WO 2017/009467

(56) References cited:
- EP-A1- 2 450 165
- CH-A- 537 834
- US-A- 4 154 641

## Description

The present application relates to a vibration welding system, a vibration welding method and a method of upgrading an existing vibration welding system.

By vibration welding, two parts, in particular two plastic parts, can be welded together by employing frictional heat at the joint surfaces of the two parts. The heat is generated by moving one part against the other under pressure. In contrast to ultrasonic welding, the frequencies employed during vibration welding are typically in the range from 50 Hz to 300 Hz and the amplitudes are typically in the range from 0.5 mm to 5 mm. Vibration welding is particularly useful for welding large parts such as automotive parts, for example for welding an airbag shroud to an as instrument panel.

Vibration welding can be performed as linear vibration welding or as orbital vibration welding. In linear vibration welding, one of the parts is vibrated in only one linear direction. In orbital vibration welding, the vibration occurs not only in one linear direction, but in several directions within one plane. In general, orbital vibration welding is constructively much more involved.

Currently, large plastic parts such as instrument panels are welded by linear vibration welding, wherein the vibration occurs in a horizontal direction. For this purpose, usually a single vibration head is used to impose a linear vibration on one of the parts, wherein this vibration head is installed in a fixed position and orientation. However, certain parts to be welded (as for example automotive parts such as instrument panels) have complex geometries, for example geometries containing undercuts, which allow a vibration welding only in one specific vibration direction. This can be achieved, in principle, by employing a vibration welding system having two or even more vibration heads which each generate respective linear vibrations, wherein these linear vibrations occur in different horizontal vibration directions. However, such a system comprising two or more vibrations heads is constructively complex and is therefore quite expensive. Moreover, the number of possible vibration directions is limited to the number of vibration heads. In addition, a system containing several vibration heads requires a lot of floor space. CH 537 834 A and EP 2 450 165 A1 disclose the ultrasonic welding of parts using a pivoting lower tool. US 4 154 641 A discloses the vibration welding of thermoplastic parts with a slidably arranged lower tool.

In view of these difficulties and disadvantages, it is an object of the present invention to provide a vibration welding system and a vibration welding method which are more flexible in terms of possible vibration directions (in a reference frame of the parts to be welded), however without being constructively too complex, and which require as little less floor space as possible. In some embodiments, loading the parts to be welded and unloading the welded parts shall be facilitated.

These and further objects can be achieved by a vibration welding system for vibration welding two parts together, in particular two plastic parts, according to claim 1. The system comprises a machine frame, a lower tooling to which a lower part is nestable and an upper tooling. The upper tooling is arranged to be brought into contact with an upper surface of an upper part. Moreover, the upper tooling is arranged to vibrate with respect to the machine frame in a vibration direction in order to at least partially weld a lower surface of the upper part to an upper surface of the lower part. According to the invention, the lower tooling is pivotably arranged with respect to the machine frame about a pivot axis. This pivotable arrangement allows first nesting the lower part to the lower tooling when this lower tooling is in a loading orientation, then pivoting the lower tooling to a welding orientation which is suitable for the specific parts to be welded, and then bringing the upper surface of the upper part into contact with the upper tooling for imposing the vibration and thus obtaining the welding. This system is therefore much more flexible in terms of possible vibration directions (in the reference frame of the parts to welder together), but it is constructively less complex and requires less floor space than systems having two or more vibration heads. The vibration welding method according to claim 12, which is also a part of the present invention, will be explained in further detail below.

In order to achieve the pivotability of the lower tooling, the system may comprise a platform and a turntable which is pivotable with respect to a platform about the pivot axis, wherein the lower tooling is fixed or fixable to the turntable.

With preference, the vibration direction is arranged substantially horizontally. This allows welding the two parts together in a stacked relationship in which the upper part is arranged on top of the lower part.

Advantageously, the pivot axis is arranged substantially perpendicularly to the vibration direction. This has the effect that all vibration directions (in the reference frame of the parts to be welded) lie in a common plane (wherein this plane is then perpendicular to the pivot axis).

In particular when the vibration direction is arranged substantially horizontally, it is further advantageous when the pivot axis of the lower tooling is arranged substantially vertically. The lower tooling may be pivotable by means of an electrical, hydraulic, pneumatic or mechanical drive, wherein a hydraulic drive is currently preferred.

With preference, the lower tooling is slidably arranged with respect to the machine frame in a joining direction in order to bring the upper surface of the upper part into contact with the upper tooling. Of course it is also conceivable that the upper tooling or even both the lower tooling and the upper tooling are slidably arranged in the joining direction with respect to the machine frame.

With preference, the joining direction is arranged substantially parallel to the pivot axis. In particular, the joining direction may be arranged substantially vertically.

According to the invention, the lower tool is slidably arranged with respect to the machine frame in a plane which is substantially perpendicular with respect to the pivot axis. In particular, said plane may be substantially horizontal. A slidable arrangement of the lower tooling in a horizontal plane makes it possible to freely relatively move the two parts to be welded together and thereby to contact different portions of the upper surface of the upper part with the upper tooling. When the system comprises a platform and a turntable as described above, the platform may be slidably arranged with respect to the machine frame in said plane, in particular in said substantially horizontal plane. Such slidable platforms in a vibration welding system as such (but without a turntable) may be constructed as known in the art.

The system may further comprise a vibration generator for generating the vibration of the upper tooling, wherein this vibration generator may be configured to generate vibrations having a frequency in the range from 50 Hz to 300 Hz and/or an amplitude in the range from 0.5 mm to 5 mm. As explained above, such frequencies and amplitudes are particularly useful in vibration welding - in contrast to the much higher frequencies and much lower amplitudes which are employed in ultrasonic welding.

The present invention also relates to a vibration welding method for vibration welding two parts together, in particular two plastic parts. This method is performed by using a system as disclosed above. The method comprises the steps of
a) providing a lower tooling in a loading orientation,
b) nesting at least a lower part to the lower tooling,
c) pivoting the lower tooling about a pivot axis from the loading orientation to a welding orientation,
d) contacting an upper surface of the lower part with a lower surface of an upper part and contacting an upper surface of the upper part with the upper tooling,
e) vibrating the upper tooling in a vibration direction, thereby welding the upper surface of the lower part to the lower surface of the upper part,
f) bringing the upper surface of the upper part out of contact with the upper tooling,
g) optionally: pivoting the lower tooling about the pivot axis, in particular from the welding orientation to the loading orientation.

In step b), the lower part may be nested to the lower tooling by clamping. In a first possible variant, only the lower part is nested to the lower tooling and only later contacted with the upper part. In a second possible variant, both the lower part and the upper part are nested to the lower tooling.

Before and/or during and/or after pivoting in step c), the lower tooling may be slid in the horizontal plane. This provides an even more flexible positioning of the lower tooling and thus the lower part.

Step d) contains two sub-steps, namely a first sub-step of contacting the upper surface of the lower part with the lower surface of an upper part and a second sub-step of contacting the upper surface of the upper part with the upper tooling. These sub-steps may be performed in either order.

Thus, in a first possible order, the upper surface of the lower part may first be contacted with the lower surface of the upper part. For example, the upper part may simply be stacked on top of the upper part. Afterwards, the upper surface of the upper part can be contacted with the upper tooling. This can be achieved, for example, by relatively moving the lower tooling together with the lower part and the upper part with respect to the upper tooling until the upper surface of the upper part is in contact with the upper tooling. This relative movement may be performed by moving the lower tooling upward, by moving the upper tooling downward or a combination of both movements.

In a second possible order of the two sub-steps of step d), the upper surface of the upper part is first contacted with the upper tooling. This can be accomplished, for example, by attaching the upper part to the upper tooling by suction, which is known as such in the art. Subsequently, the upper surface of the lower part is contacted with the lower surface of the upper part. This may also be achieved by relatively moving the lower tooling together with the lower part with respect to the upper tooling, i.e. by moving the lower tooling downward, by moving the upper tooling upward or a combination of both movements.

Preferably, the frequency of the vibrations lies in the range from 50 Hz to 300 Hz and/or the amplitude of the vibration lies in the range from 0.5 mm to 5 mm, as such frequencies and amplitudes have proved to be suitable for vibration welding.

The parts that are welded together may be automotive parts, such as large injection molded parts. In particular, the parts may be instrument panels, airbag shrouds, instrument panel air ducts, instrument panel reinforcements, automotive interior parts like center consoles, door panels, head liners, automotive exterior parts like bumpers, plastic side panels, non-automatic plastic pallets or plastic fencing.

A further aspect of the present invention relates to a method of upgrading an existing vibration welding system to a vibration welding system as described above. The existing vibration welding system comprises a machine frame, a lower tooling to which a lower part is nestable and an upper tooling. The upper tooling is arranged to be brought into contact with an upper surface of an upper part. Moreover, the upper tooling is arranged to vibrate with respect to the machine frame in a vibration direction in order to at least partially weld a lower surface of the upper part to an upper surface of the lower part.

The method of upgrading comprises the step of providing a lower tooling which is pivotably arranged with respect to the machine frame about a pivot axis. Thus, with this method of upgrading, an existing vibration welding system can be upgraded to a vibration welding system according to the present invention, thereby obtaining an improved vibration welding system having the advantages described above.

The upgrading may be performed by providing a turntable which is pivotable with respect to a platform about the pivot axis and by fixing the lower tooling to the turntable. Said platform may be part of the existing system. For example, this platform may already be arranged slidably with respect to the machine frame of the existing system. Alternatively, the platform may also be provided during upgrading.

An exemplary embodiment of the present invention as shown in the accompanying drawings will now be explained in detail. In the drawings,
- Figure 1a:: shows a vibration welding system according to the invention with a lower tooling in a loading orientation in a front view;
- Figure 1b:: shows the system with the lower tooling in the loading orientation in a side view;
- Figure 2a:: shows the system with the lower tooling in a welding orientation in a front view;
- Figure 2b:: shows the system with the lower tooling in the welding orientation in a side view;
- Figure 3a:: shows the system with the lower tooling in a welding orientation and position in a front view;
- Figure 3b:: shows the system with the lower tooling in the welding orientation and position in a side view.

The figures show a vibration welding system 10 according to the invention, which can be applied for vibration welding two parts 50, 60 together. In this particular example, the lower part 50 is an automotive instrument panel and the upper part 60 is an airbag shroud. However, the invention is certainly not limited to these particular parts.

The system 10 comprises a machine frame (which is not shown in the drawings), a lower tooling 12 and an upper tooling 13. The lower tooling 12 is pivotably arranged with respect to the machine frame about a vertical pivot axis P. For this purpose, the system 10 comprises a platform 14 and a turntable 15 which is pivotable with respect to a platform about the pivot axis P. The turntable 15 and thus the lower tooling 12 are pivotable with respect to the platform 14 by means of a hydraulic drive.

The upper tooling 13 is arranged to be brought into contact with an upper surface 65 of the airbag shroud 60. It can vibrate with respect to the machine frame in a horizontal vibration direction X in order to at least partially weld a lower surface 61 of the airbag shroud 60 to an upper surface 51 of the instrument panel 50, as will also be explained in further detail below.

The lower tooling 12 is also slidably arranged with respect to the machine frame in a vertical joining direction Y. In this way, the upper surface 65 of the airbag shroud 60 can be brought into contact with the upper tooling 13. Moreover, the lower tooling 12 is slidably arranged with respect to the machine frame in a horizontal plane, i. e. in a plane which is perpendicular with respect to the pivot axis P. This slidability is achieved through the platform 14, which is slidable in these directions. As slidable platforms 14 in vibration welding system as such (however without a turntable 15) are known in the art, a detailed description of the construction in this respect can be dispensed with.

The system 10 further comprises a vibration generator for generating the vibration of the upper tooling 13 at a frequency in the range from 50 Hz to 300 Hz and at an amplitude in the range from 0.5 mm to 5 mm. These parameters are suitable for vibration welding. The vibration generator as such may be constructed as known in the art and may comprise a vibrating platen, springs, electromagnets and a bridge. The springs may be mounted to one side of the vibrating platen which also includes the magnets of the electromagnetic system. The upper tooling 13 may be mounted on a lower side of the vibration platen.

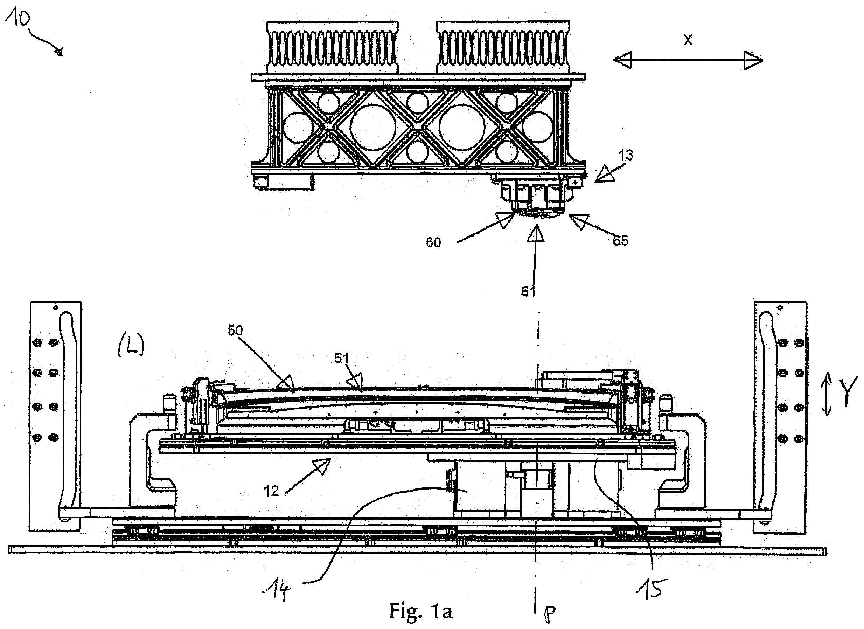

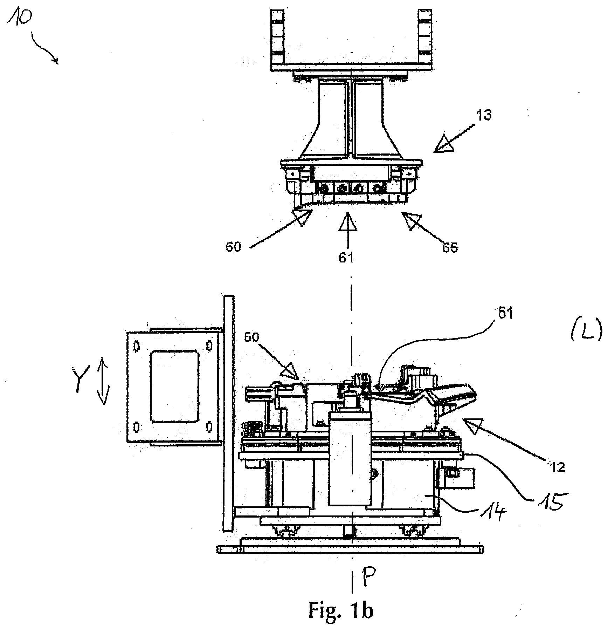

In a first step a) of the vibration welding method according to the invention, the lower tooling 12 is provided in a loading orientation L. In a subsequent step b), the instrument panel 50 is nested to the lower tooling 12, for example by clamping. The upper surface 65 of the airbag shroud 60 is attached to the upper tooling 13, for example by suction. Thus, the situation shown in Figures 1a and 1b is obtained.

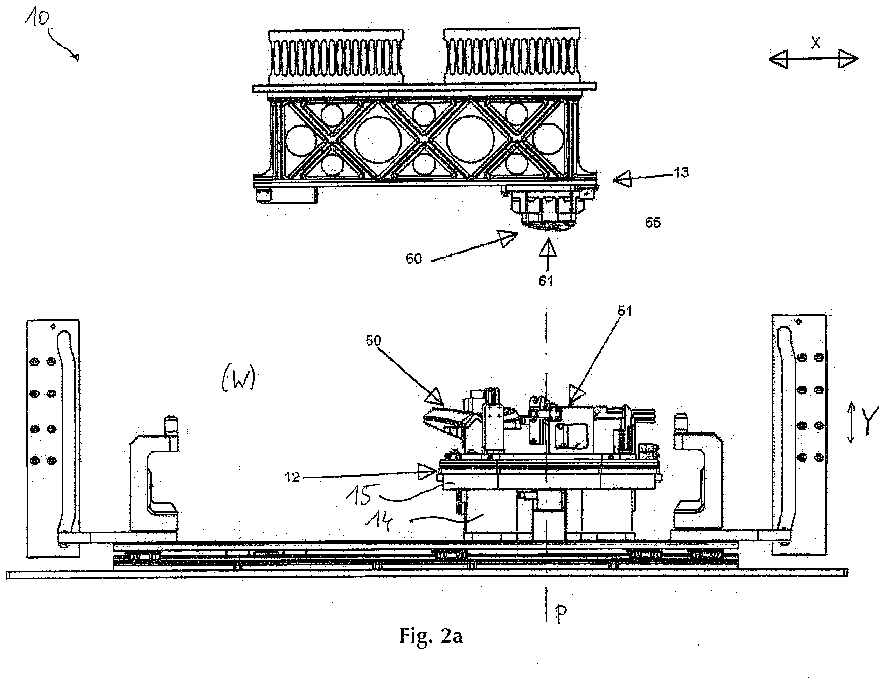

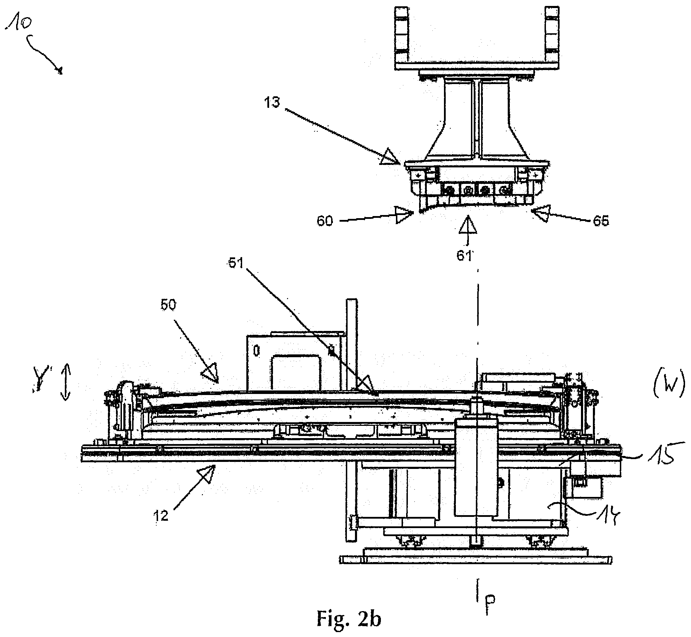

When the instrument panel 50 has been nested to the lower tooling 12, the lower tooling 12 is pivoted by 90° about the pivot axis P in a step c). The welding orientation W thus obtained is shown in Figures 2a and 2b. Of course, it is also possible to perform a pivoting about any other angle than 90°. Before and/or during and/or after pivoting, the lower tooling 12 may be slid in the horizontal plane for positioning the lower tooling 12 with respect to the upper tooling 13.

Subsequently, in a step d), the lower tooling 12 is lifted together with the instrument panel 50 attached thereto towards the upper tooling 13 and the airbag shroud 60 attached thereto, so that the upper surface 55 of the instrument panel 50 is brought into contact with the lower surface 61 of the airbag shroud 60.

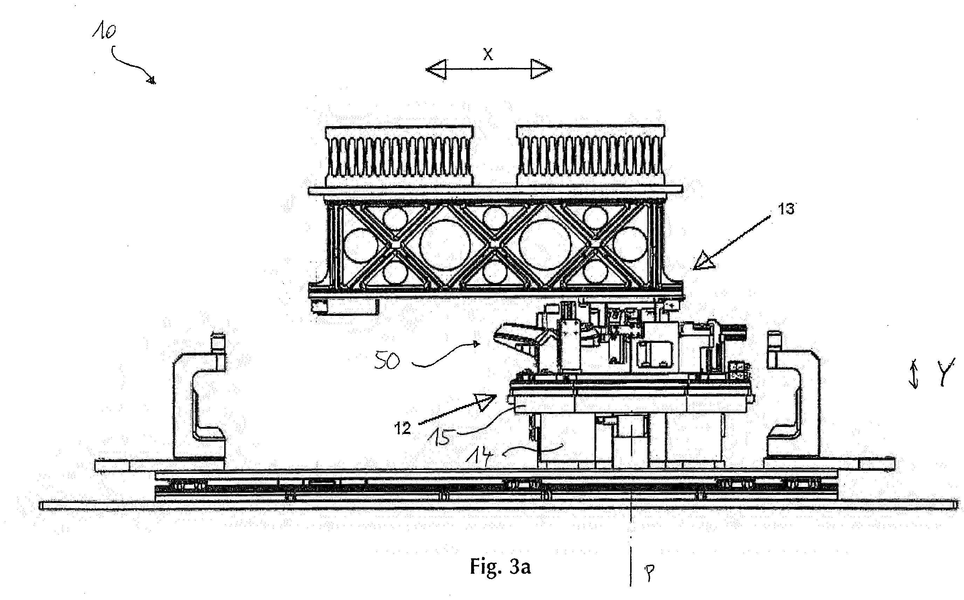

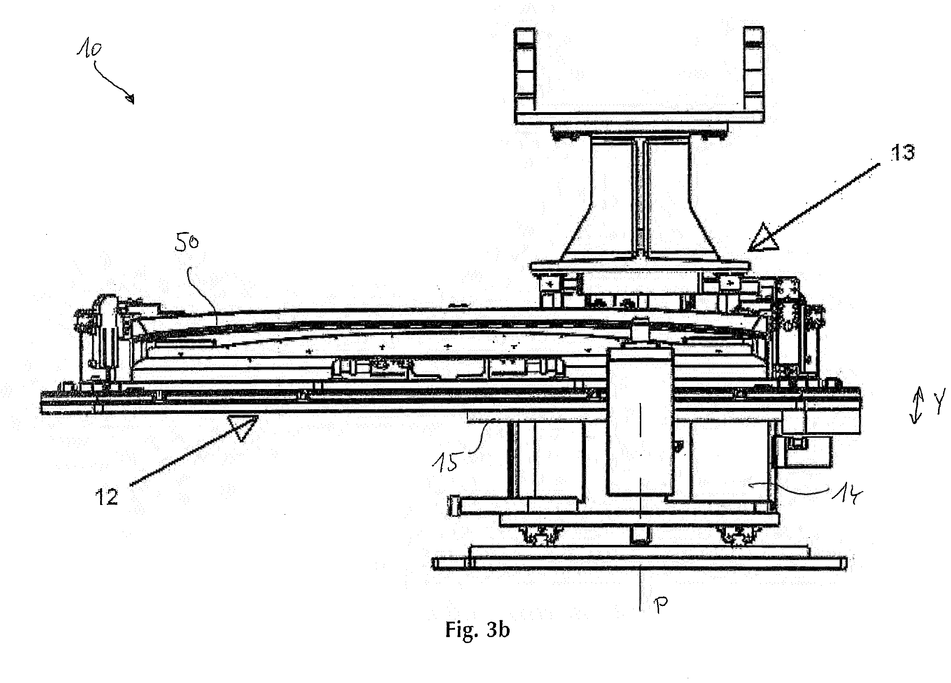

In this position, which is shown in Figures 3a and 3b, the vibration generator causes the upper tooling 13 to vibrate in the vibration direction X in a step e). This causes a welding of the upper surface 51 of the instrument panel 50 to the lower surface 61 of the airbag shroud 60.

Afterwards, in a step f), the lower tooling 12 together with the instrument panel 50 and the airbag shroud 60 are lowered again so that the upper surface 65 of the airbag shroud is brought out of contact with the upper tooling 13.

Subsequently, in a step g), the lower tooling 12 is pivoted again about the pivot axis P from the welding orientation to the loading orientation L. The parts 50, 60 welded together may then be removed from the system 10.

As can be seen from this exemplary embodiment, the present invention allows loading the parts to be welded in a loading orientation and then welding them in a welding orientation which is different from the loading orientation. This significantly enhances the flexibility of the system in terms of possible vibration directions (in the reference frame of the parts to be welded), reduces that required machine space and also greatly facilitates the loading and unloading process.

## Claims

1. A vibration welding system (10) for vibration welding two parts (50, 60) together, in particular two plastic parts (50, 60), the system (10) comprising
- a machine frame,
- a lower tooling (12) to which at least a lower part (50) is nestable,
- an upper tooling (13) which is arranged to be brought into contact with an upper surface (65) of an upper part (60) and to vibrate with respect to the machine frame in a vibration direction (X) in order to at least partially weld a lower surface (61) of the upper part (60) to an upper surface (51) of the lower part (50),
**characterized in that**
the lower tooling (12) is pivotably arranged with respect to the machine frame about a pivot axis (P) and slidably arranged with respect to the machine frame in a plane which is substantially perpendicular with respect to the pivot axis (P), in particular substantially horizontal.

2. The system (10) according to claim 1, wherein the vibration direction (X) is arranged substantially horizontally.

3. The system (10) according to either of the preceding claims, wherein the pivot axis (P) is arranged substantially perpendicularly to the vibration direction (X).

4. The system (10) according to any of the preceding claims, wherein the pivot axis (P) of the lower tooling (12) is arranged substantially vertically.

5. The system (10) according to any of the preceding claims, wherein the lower tooling (12) is pivotable by means of an electrical, hydraulic, pneumatic or mechanical drive.

6. The system (10) according to any of the preceding claims, wherein the lower tooling (12) is slidably arranged with respect to the machine frame in a joining direction (Y) in order to bring the upper surface (65) of the upper part (60) into contact with the upper tooling (13).

7. The system (10) according to claim 6, wherein the joining direction (Y) is arranged substantially parallel to the pivot axis (P).

8. The system (10) according to either of claims 6 and 7, wherein the joining direction (Y) is arranged substantially vertically.

9. The system (10) according to any of the preceding claims, further comprising a platform (14) and a turntable (15) which is pivotable with respect to the platform (14) about the pivot axis (P), wherein the lower tooling (12) is fixed or fixable to the turntable and wherein the platform (14) is slidably arranged with respect to the machine frame in said plane.

10. The system (10) according to any of the preceding claims, further comprising a vibration generator for generating the vibration of the upper tooling (13), wherein the vibration generator is configured to generate vibrations having a frequency in the range from 50 Hz to 300 Hz.

11. The system (10) according to any of the preceding claims, further comprising a vibration generator for generating the vibration of the upper tooling (13), wherein the vibration generator is configured to generate vibrations having an amplitude in the range from 0.5 mm to 5 mm.

12. A vibration welding method for vibration welding two parts (50, 60) together, in particular two plastic parts (50, 60), by using a system (10) according to any of the preceding claims, the method comprising the steps of
a) providing a lower tooling (12) in a loading orientation (L),
b) nesting at least a lower part (50) to the lower tooling (12),
c) pivoting the lower tooling (12) about a pivot axis (P) from the loading orientation (L) to a welding orientation (W),
d) contacting an upper surface (51) of the lower part (50) with a lower surface (61) of an upper part (60) and contacting an upper surface (65) of the upper part (60) with the upper tooling (13),
e) vibrating the upper tooling (13) in a vibration direction (X), thereby welding the upper surface (51) of the lower part (50) to the lower surface (61) of the upper part (60),
f) bringing the upper surface (65) of the upper part (60) out of contact with the upper tooling (13),
g) optionally: pivoting the lower tooling (12) about the pivot axis (P), in particular from the welding orientation (W) to the loading orientation (L).

13. The method according to claim 12, wherein the frequency of the vibration lies in the range from 50 Hz to 300 Hz.

14. The method according to either of claims 12 and 13, wherein the amplitude of the vibration lies in the range from 0.5 mm to 5 mm.

15. A method of upgrading an existing vibration welding system to a vibration welding system (10) according to any of claims 1 to 11, the existing vibration welding system comprising
- a machine frame,
- a lower tooling (12) to which at least a lower part (50) is nestable,
- an upper tooling (13) which is arranged to be brought into contact with an upper surface (65) of an upper part (60) and to vibrate with respect to the machine frame in a vibration direction (X) in order to at least partially weld a lower surface (61) of the upper part (60) to an upper surface (51) of the lower part (50),
wherein the method comprises the step of providing a lower tooling (12) which is pivotably arranged with respect to the machine frame about a pivot axis (P).

## Patentansprüche

1. Vibrationsschweisssystem (10) zum Vibrationsschweissen von zwei Teilen (50, 60) miteinander, insbesondere von zwei Kunststoffteilen (50, 60), wobei das System (10) umfasst
- ein Maschinengestell,
- ein Unterwerkzeug (12), in das mindestens ein unteres Teil (50) einsetzbar ist,
- ein Oberwerkzeug (13), das angeordnet ist, um mit einer oberen Fläche (65) eines oberen Teils (60) in Kontakt gebracht zu werden und um in Bezug auf das Maschinengestell in einer Vibrationsrichtung (X) zu vibrieren, um eine untere Fläche (61) des oberen Teils (60) zumindest teilweise an eine obere Fläche (51) des unteren Teils (50) zu schweissen,
**dadurch gekennzeichnet, dass**
das Unterwerkzeug (12) in Bezug auf das Maschinengestell um eine Schwenkachse (P) schwenkbar und in einer zur Schwenkachse (P) im Wesentlichen senkrechten, insbesondere im Wesentlichen horizontalen Ebene in Bezug auf das Maschinengestell verschiebbar angeordnet ist.

2. System (10) nach Anspruch 1, wobei die Vibrationsrichtung (X) im Wesentlichen horizontal angeordnet ist.

3. System (10) nach einem der vorstehenden Ansprüche, wobei die Schwenkachse (P) im Wesentlichen senkrecht zur Vibrationsrichtung (X) angeordnet ist.

4. System (10) nach einem der vorstehenden Ansprüche, wobei die Schwenkachse (P) des Unterwerkzeuges (12) im Wesentlichen vertikal angeordnet ist.

5. System (10) nach einem der vorstehenden Ansprüche, wobei das Unterwerkzeug (12) mittels eines elektrischen, hydraulischen, pneumatischen oder mechanischen Antriebs schwenkbar ist.

6. System (10) nach einem der vorstehenden Ansprüche, wobei das Unterwerkzeug (12) in Bezug auf das Maschinengestell in einer Fügerichtung (Y) verschiebbar angeordnet ist, um die obere Fläche (65) des oberen Teils (60) mit dem Oberwerkzeug (13) in Kontakt zu bringen.

7. System (10) nach Anspruch 6, wobei die Fügerichtung (Y) im Wesentlichen parallel zur Schwenkachse (P) angeordnet ist.

8. System (10) nach einem der Ansprüche 6 und 7, wobei die Fügerichtung (Y) im Wesentlichen vertikal angeordnet ist.

9. System (10) nach einem der vorstehenden Ansprüche, das weiterhin eine Plattform (14) und einen Drehtisch (15) umfasst, der in Bezug auf die Plattform (14) um die Schwenkachse (P) schwenkbar ist, wobei das Unterwerkzeug (12) an dem Drehtisch befestigt oder befestigbar ist und wobei die Plattform (14) in Bezug auf das Maschinengestell in der genannten Ebene verschiebbar angeordnet ist.

10. System (10) nach einem der vorstehenden Ansprüche, weiterhin umfassend einen Vibrationsgenerator zum Erzeugen der Vibration des Oberwerkzeuges (13), wobei der Vibrationsgenerator konfiguriert ist, um Vibrationen mit einer Frequenz im Bereich von 50 Hz bis 300 Hz zu erzeugen.

11. System (10) nach einem der vorhergehenden Ansprüche, weiterhin umfassend einen Vibrationsgenerator zum Erzeugen der Vibration des Oberwerkzeugs (13), wobei der Vibrationsgenerator konfiguriert ist, um Vibrationen mit einer Amplitude im Bereich von 0,5 mm bis 5 mm zu erzeugen.

12. Vibrationsschweissverfahren zum Vibrationsschweissen von zwei Teilen (50, 60), insbesondere von zwei Kunststoffteilen (50, 60), unter Verwendung eines Systems (10) nach einem der vorhergehenden Ansprüche, wobei das Verfahren die folgenden Schritte umfasst:
a) Erzeugung von Vibrationen mit einer Amplitude im Bereich von 0,5 mm bis 5 mm,
b) Bereitstellung eines Unterwerkzeugs (12) in einer Beladeorientierung (L),
c) Einsetzen mindestens eines unteres Teils (50) in das Unterwerkzeug (12),
d) Schwenken des Unterwerkzeugs (12) um eine Schwenkachse (P) von der Beladeposition (L) in eine Schweissorientierung (W),
e) Inkontaktbringen einer oberen Fläche (51) des unteren Teils (50) mit einer unteren Fläche (61) eines oberen Teils (60) und Berühren einer oberen Fläche (65) des oberen Teils (60) mit dem Oberwerkzeug (13),
f) Vibrieren des oberen Werkzeugs (13) in einer Vibrationsrichtung (X), wodurch die obere Fläche (51) des unteren Teils (50) mit der unteren Fläche (61) des oberen Teils (60) verschweisst wird,
g) Ausserkontaktbringen der oberen Fläche (65) des oberen Teils (60) mit dem Oberwerkzeug (13),
h) optional: Schwenken des Unterwerkzeuges (12) um die Schwenkachse (P), insbesondere von der Schweissorientierung (W) in die Beladeorientierung (L).

13. Verfahren nach Anspruch 12, wobei die Frequenz der Vibration im Bereich von 50 Hz bis 300 Hz liegt.

14. Verfahren nach einem der Ansprüche 12 und 13, wobei die Amplitude der Vibration im Bereich von 0,5 mm bis 5 mm liegt.

15. Verfahren zum Aufrüsten eines vorhandenen Vibrationsschweisssystems zu einem Vibrationsschweisssystem (10) nach einem der Ansprüche 1 bis 11, wobei das vorhandene Vibrationsschweisssystem umfasst
- ein Maschinengestell,
- ein Unterwerkzeug (12), in das mindestens ein unteres Teil (50) einsetzbar ist,
- ein Oberwerkzeug (13), das angeordnet ist, um mit einer oberen Fläche (65) eines oberen Teils (60) in Kontakt gebracht zu werden und um in Bezug auf das Maschinengestell in einer Vibrationsrichtung (X) zu vibrieren, um eine untere Fläche (61) des oberen Teils (60) zumindest teilweise an eine obere Fläche (51) des unteren Teils (50) zu schweissen,
wobei das Verfahren den Schritt des Bereitstellens eines Unterwerkzeugs (12) umfasst, das drehbar ist.

## Revendications

1. Système de soudage par vibration (10) pour le soudage par vibration de deux pièces (50, 60) l'une à l'autre, en particulier de deux pièces en matière plastique (50, 60), le système (10) comprenant
- un châssis de machine,
- un outillage inférieur (12) sur lequel au moins une pièce inférieure (50) est emboîtable,
- un outillage supérieur (13) qui est agencé pour être mis en contact avec une surface supérieure (65) d'une pièce supérieure (60) et pour vibrer, par rapport au châssis de machine, dans une direction de vibration (X) afin de souder au moins partiellement une surface inférieure (61) de la pièce supérieure (60) à une surface supérieure (51) de la pièce inférieure (50),
**caractérisé en ce que**
l'outillage inférieur (12) est disposé de manière à pouvoir pivoter par rapport au châssis de machine autour d'un axe de pivotement (P) et à pouvoir coulisser par rapport au châssis de machine dans un plan qui est sensiblement perpendiculaire à l'axe de pivotement (P), en particulier sensiblement horizontal.

2. Système (10) selon la revendication 1, dans lequel la direction de vibration (X) est disposée sensiblement horizontalement.

3. Système (10) selon l'une des revendications précédentes, dans lequel l'axe de pivotement (P) est disposé sensiblement perpendiculairement à la direction de vibration (X).

4. Système (10) selon l'une des revendications précédentes, dans lequel l'axe de pivotement (P) de l'outillage inférieur (12) est disposé sensiblement verticalement.

5. Système (10) selon l'une des revendications précédentes, dans lequel l'outillage inférieur (12) peut pivoter au moyen d'un entraînement électrique, hydraulique, pneumatique ou mécanique.

6. Système (10) selon l'une des revendications précédentes, dans lequel l'outillage inférieur (12) est disposé de façon coulissante par rapport au châssis de machine dans une direction d'assemblage (Y) afin d'amener la surface supérieure (65) de la pièce supérieure (60) en contact avec l'outillage supérieur (13).

7. Système (10) selon la revendication 6, dans lequel la direction d'assemblage (Y) est disposée sensiblement parallèlement à l'axe de pivotement (P).

8. Système (10) selon l'une des revendications 6 et 7, dans lequel la direction d'assemblage (Y) est disposée sensiblement verticalement.

9. Système (10) selon l'une des revendications précédentes, comprenant en outre une plateforme (14) et un plateau tournant (15) qui peut pivoter, par rapport à la plateforme (14), autour de l'axe de pivotement (P), dans lequel l'outillage inférieur (12) est fixé ou peut être fixé au plateau tournant et dans lequel la plateforme (14) est disposée, par rapport au châssis de machine, de manière coulissante dans ledit plan.

10. Système (10) selon l'une des revendications précédentes, comprenant en outre un générateur de vibrations pour générer la vibration de l'outillage supérieur (13), dans lequel le générateur de vibrations est configuré pour générer des vibrations ayant une fréquence dans la plage de 50 Hz à 300 Hz.

11. Système (10) selon l'une quelconque des revendications précédentes, comprenant en outre un générateur de vibrations pour générer la vibration de l'outillage supérieur (13), dans lequel le générateur de vibrations est configuré pour générer des vibrations ayant une amplitude dans la plage de 0,5 mm à 5 mm.

12. Procédé de soudage par vibration pour souder par vibration deux pièces (50, 60) l'une à l'autre, en particulier deux pièces en matière plastique (50, 60), en utilisant un système (10) selon l'une quelconque des revendications précédentes, le procédé comprenant les étapes suivantes
a) prévoir un outillage inférieur (12) dans une orientation de chargement (L),
b) emboîter au moins une pièce inférieure (50) dans l'outillage inférieur (12),
c) faire pivoter l'outillage inférieur (12) autour d'un axe de pivotement (P) de l'orientation de chargement (L) à une orientation de soudage (W),
d) mettre en contact une surface supérieure (51) de la pièce inférieure (50) avec une surface inférieure (61) d'une pièce supérieure (60) et mettre en contact une surface supérieure (65) de la pièce supérieure (60) avec l'outillage supérieur (13),
e) faire vibrer l'outillage supérieur (13) dans une direction de vibration (X), soudant ainsi la surface supérieure (51) de la pièce inférieure (50) à la surface inférieure (61) de la pièce supérieure (60),
f) mettre la surface supérieure (65) de la pièce supérieure (60) hors de contact avec l'outillage supérieur (13),
g) en option : pivotement de l'outillage inférieur (12) autour de l'axe de pivotement (P), en particulier de l'orientation de soudage (W) à l'orientation de chargement (L).

13. Procédé selon la revendication 12, dans lequel la fréquence de la vibration se situe dans la plage de 50 Hz à 300 Hz.

14. Procédé selon l'une des revendications 12 et 13, dans lequel l'amplitude de la vibration se situe dans la plage de 0,5 mm à 5 mm.

15. Procédé de mise à niveau d'un système de soudage par vibration existant en un système de soudage par vibration (10) selon l'une quelconque des revendications 1 à 11, le système de soudage par vibration existant comprenant
- un châssis de machine,
- un outillage inférieur (12) sur lequel au moins une pièce inférieure (50) est emboîtable,
- un outillage supérieur (13) qui est agencé pour être mis en contact avec une surface supérieure (65) d'une pièce supérieure (60) et pour vibrer, par rapport au châssis de machine, dans une direction de vibration (X) afin de souder au moins partiellement une surface inférieure (61) de la pièce supérieure (60) à une surface supérieure (51) de la pièce inférieure (50),
dans lequel le procédé comprend l'étape consistant à fournir un outillage inférieur (12) qui est disposé de manière pivotante par rapport au châssis de machine autour d'un axe de pivotement (P).
